(19) Europäisches Patentamt
European Patent Office
Office européen des brevets

(11) Veröffentlichungsnummer: **0 140 272**
**B1**

(12) # EUROPÄISCHE PATENTSCHRIFT

(45) Veröffentlichungstag der Patentschrift: **16.09.87**

(51) Int. Cl.⁴: **C 08 G 75/02**

(21) Anmeldenummer: **84112435.7**

(22) Anmeldetag: **16.10.84**

(54) **Verfahren zur Herstellung von gegebenenfalls verzweigten Polyarylensulfiden mit verminderter Korrosivität.**

(30) Priorität: **28.10.83 DE 3339233**

(43) Veröffentlichungstag der Anmeldung:
**08.05.85 Patentblatt 85/19**

(45) Bekanntmachung des Hinweises auf die Patenterteilung:
**16.09.87 Patentblatt 87/38**

(84) Benannte Vertragsstaaten:
**DE FR GB IT**

(56) Entgegenhaltungen:
**EP - A - 0 087 045**
**GB - A - 1 065 447**
**US - A - 3 457 242**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Ostlinning, Edgar, Dr., Rembrandtstrasse 37, D-4000 Düsseldorf (DE)**
Erfinder: **Idel, Karsten, Dr., Scheiblerstrasse 81, D-4150 Krefeld (DE)**
Erfinder: **Meyer, Rolf-Volker, Dr., Buchheimerstrasse 23, D-4150 Krefeld (DE)**

**EP 0 140 272 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist ein Verfahren zur Herstellung von gegebenenfalls verzweigten Polyarylensulfiden, die sich durch deutlich geringere Korrosivität auszeichnen.

Polyarylensulfide und ihre Herstellung sind bekannt (siehe beispielsweise US-PS 2513188, 3117620, 3354129, 3524835, 3790536, 3839301, 4038259, 4038260, 4038261, 4038262, 4056515, 4060520, 4064114, 4116947, 4282347, DE-AS 2453485, 2453749, DE-OS 2634462, 2623333, 2930797, 2930710, 3019732, 3030488).

Ausserdem sind besondere Reinigungsverfahren bekannt (siehe beispielsweise US-PS 4071509, JA-PS 57108-135, DE-OS 3143992).

Ebenso sind Verfahrensweisen der Aufarbeitung beschrieben (siehe beispielsweise US-PS 3354129, 3457242, 3478000, 3687907, 3707528, 3839302, 3941664, 3956060, 4046749, 4178435, EP 79144).

So ist beispielsweise bekannt, das Lösungsmittel, in dem die Umsetzung durchgeführt wurde, aus dem Reaktionsgemisch zu verdampfen und anorganische Salze mit Wasser anschliessend aus dem Rückstand herauszuwaschen.

Ebenso kann das Reaktionsgemisch ohne Abtrennung des Lösungsmittels sofort in Wasser gegeben und gewaschen werden.

Auch ist bekannt, eine zusätzliche Wäsche mit organischen Lösungsmitteln wie Aceton, aromatischen Kohlenwasserstoffen, Dimethylsulfoxid (DMSO) und N-Methylpyrrolidon (NMP) durchzuführen.

Weiterhin ist beschrieben, das Reaktionsgemisch in Kohlenwasserstoffe einzutragen und anschliessend mit Wasser zu waschen (US-PS 3457242).

Ebenso ist bekannt, Polyarylensulfide durch zusätzliche Verfahrensschritte zu reinigen, insbesondere um NaCl-Verunreinigungen zu entfernen (z. B. Erhitzen in Wasser mit Alkaliacetaten bis auf Temperaturen kurz unter dem Polymerenschmelzpunkt [DE-OS 3143992]; Extraktion mit Lösungsmittelgemischen wie N-Methylpyrrolidon mit Ethylenglykol [JA-PS 57108-135]; Erhitzen in organischen Amiden in Gegenwart bestimmter Alkalisalze [US-PS 4071509]).

Weiterin ist aus der JA-PS 55-54330 bekannt, bei der Aufarbeitung das hergestellte Polymere durch Eintragen des Reaktionsgemisches in Methanol und anschliessend durch Waschen mit Wasser und dann Methanol zu reinigen.

Polyarylensulfide, die nach diesen Verfahren hergestellt wurden, besitzen alle eine nicht zu vernachlässigende Korrosionsfähigkeit, die durch Abspaltung von sauren Gasen beim Erhitzen auf über 150 °C hervorgerufen wird.

In der Hauptsache sind diese sauren Gase schwefelhaltig (F. Quella, Kunststoffe 71 [1981] 6 S. 386ff.). Da saure Gase Metalle angreifen können, sollten Polyarylensulfide mit derartigen Eigenschaften nicht längere Zeit bei hohen Temperaturen mit Metallen in Kontakt kommen. Das ist z. B. bei der Verarbeitung durch Spritzguss oder Extrusion im allgemeinen unvermeidbar. Ebenso werden Metalle in Formteilen angegriffen, was zur Zerstörung des Teils führen kann.

Es wurde nun gefunden, dass diese korrosiven Eigenschaften von Polyarylensulfiden durch geeignete Aufarbeitung deutlich reduziert werden können, wenn bei der Herstellung der Polyarylensulfide das gefällte Produkt mit Alkoholen oder Ketonen, oder dem gleichen Lösungsmittel, das bei der Umsetzung verwendet wurde, und abschliessend mit Wasser gewaschen wird.

Gegenstand der Erfindung ist somit ein Verfahren zur Herstellung von hochmolekularen, gegebenenfalls verzweigten Polyarylensulfiden aus

a) 50–100 Mol-% Dihalogenaromaten der Formel

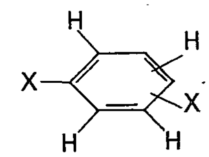

(I),

und 0–50 Mol-% Dihalogenaromaten der Formel

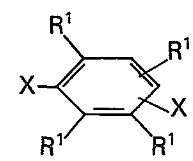

(II),

in denen

X für zueinander meta- oder paraständiges Halogen, wie Chlor oder Brom, steht und

$R^1$ gleich oder verschieden ist und Wasserstoff, Alkyl, Cycloalkyl, Aryl, Alkylaryl, Arylalkyl sein kann, wobei zwei zueinander orthoständige Reste $R^1$ zu einem aromatischen oder heterocyclischen Ring verknüpft sein können und immer ein Rest $R^1$ verschieden von Wasserstoff ist und

b) 0 bis 5 Mol-%, bevorzugt 0,05 bis 2,5 Mol-%, bezogen auf die Summe der Dihalogenaromaten der Formel I und II, eines Tri- oder Tetrahalogenaromaten der Formel

$$ArX_n \qquad (III),$$

wobei

Ar ein aromatischer oder heterocyclischer Rest ist,

X für Halogen wie Chlor oder Brom und

n für die Zahl 3 oder 4 steht und

c) Alkalisulfiden, bevorzugt Natrium- oder Kaliumsulfid oder deren Mischung, bevorzugt in Form ihrer Hydrate oder wässrigen Mischungen, gegebenenfalls zusammen mit Alkalihydroxiden wie Natrium- und Kaliumhydroxid, wobei das molare Verhältnis von (a+b):c im Bereich von 0,85:1 bis 1,15:1, vorzugsweise 0,95:1 bis 1,05:1, liegt in

d) organischen Lösungsmitteln, bevorzugt N-Alkyllactamen oder peralkylierten Harnstoffen, gegebenenfalls unter Mitverwendung von Katalysatoren und/oder Cosolventien, wobei das molare Verhältnis von Alkalisulfiden c) zu dem organischen Lösungsmittel d) im Bereich von 1:2 bis 1:15 liegt, und

e) Wasser in Form von Hydrat- oder freiem Wasser, wobei das molare Verhältnis von c:e im Bereich von 1: bis 1:3 liegt und das Verfahren bei einer Reaktionstemperatur von 160 °C bis 270 °C, gegebenenfalls unter Überdruck durchgeführt wird, wobei man nach Beendigung der Umsetzung das Reaktionsgemisch in

f) Alkohole oder Ketone oder das gleiche Lösungsmittel, das bei der Reaktion verwendet wurde, als Fällungsmittel einträgt und anschliessend wäscht, dadurch gekennzeichnet, dass man das gefällte Produkt in der folgenden Reihenfolge wäscht:

(1) zuerst mit Komponente f) und

(2) abschliessend mit Wasser.

Die Umsetzungsdauer des Verfahrens beträgt bis zu 24 Stunden, vorzugsweise 2 bis 18 Stunden.

Als Katalysatoren können für diesen Zweck übliche Substanzen in üblichen Mengen eingesetzt werden, beispielsweise Alkalifluoride, Alkaliphosphate und Alkalicarboxylate. Es werden pro Mol Alkalisulfid 0,02 bis 1,0 Mol Katalysator eingesetzt.

Als Cosolventien können beispielsweise N,N-Dialkylcarbonsäureamide von $C_1$–$C_8$-aliphatischen und $C_6$–$C_{12}$-aromatischen Carbonsäuren in einer Menge von 0,02 bis 1,0 Mol, bezogen auf 1 Mol Alkalisulfid, eingesetzt werden.

$R^1$ steht in Formel II vorzugsweise für Wasserstoff, $C_1$–$C_{20}$-Alkyl, $C_5$–$C_{20}$-Cycloalkyl, $C_6$–$C_{24}$-Aryl, $C_7$–$C_{24}$-Alkylaryl oder $C_7$–$C_{24}$-Aralkyl. Weiterhin können zwei zueinander orthoständige Reste $R^1$ einen ankondensierten aromatischen Ring mit insgesamt 6 C-Atomen oder einen ankondensierten heterocyclischen Ring mit 5 bis 6 Ringatomen und 1 bis 3 Heteroatomen wie N, O und S bilden.

Ar steht vorzugsweise für einen aromatischen Rest mit 6 bis 24 C-Atomen oder heterocyclischen Rest mit 6 bis 24 Ringatomen, besonders bevorzugt für einen aromatischen Rest mit 6 bis 10 C-Atomen oder heterocyclischen Rest mit 6 bis 10 Ringatomen, wobei die heterocyclischen Reste bis zu 3 Heteroatomen wie N, S, O enthalten können.

Akylisulfide werden in üblichen Mengen und in üblicher Weise eingesetzt. Z. B. sind Natrium- und Kaliumsulfid geeignet. Es können Alkylsulfide eingesetzt werden, die aus Hydrogensulfiden mit Alkalihydroxiden wie LiOH, NaOH uind KOH regeneriert werden. In jedem Fall können Mischungen sowohl der Sulfide als auch der Hydroxide eingesetzt werden.

Erfindungsgemäss können meta- und para-Dihalogenaromaten der Formel (I) bzw. (II) eingesetzt werden. In diesem Fall kann das Verhältnis meta- zu para-Dihalogenaromaten bis zu 30:70 betragen.

Das Verfahren kann bei einem Überdruck bis zu 25 bar ausgeführt werden, vorzugsweise bei einem Druck bis 18 bar.

Bevorzugt werden p-Dihalogenaromaten eingesetzt.

Sollen verzeigte Polyarylensulfide hergestellt werden, müssen mindestens 0,05 Mol-% eines Tri- oder Tetrahalogenaromaten der Formel (III) eingesetzt werden. Vorzugsweise werden 0,05 bis 2,5 Mol-% bezogen auf die Summe der Dihalogenaromaten eines Di- oder Tetrahalogenaromaten eingesetzt.

Beispiele für erfindungsgemäss einzusetzende Dihalogenaromaten der Formel (I) sind: p-Dichlorbenzol, p-Dibrombenzol, 1-Chlor-4-brombenzol, 1,3-Dichlorbenzol, 1,3-Dibrombezol, 1-Chlor-3-brombenzol und 1-Chlor-3-brombenzol. Sie sind allein oder im Gemisch miteinander verwendbar. Besonders bevorzugt sind 1,4-Dichlorbenzol und 1,4-Dibrombenzol.

Beispiele für erfindungsgemäss einzusetzende Dihalogenaromaten der Formel (II) sind: 2,5-dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,5-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Beispiele für erfindungsgemäss einzusetzende Tri- bzw. Tetrahalogenaromaten der Formel (III) sind: 1,2,3-Trichlorbenzol, 1,2,4-Trichlorbenzol, 1,2,4-Tribrombenzol, 1,3,5-Trichlor-2,4,5-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetrachlorbeiphenyl, 1,3,5-Trichlor-triazin.

Beispiele für erfindungsgemäss einzusetzende Lösungsmittel für die Umsetzung sind: N-Methylpyrrolidon, N-Ethylpyrrolidon, N-Methylpiperidon, N-Methylcaprolactam, N-Ethylcaprolactam und 1,3 Dimethylimidazolidinon.

Beispiele für die erfindungsgemäss als Fällungsmittel einzusetzenden Alkohole sind z. B. aliphatische Alkohole wie Methanol, Ethanol, Propanol, Isopropanol, Butanol, Isobutanol, tert.-Butanol, Pentanol, Hexanol, Cyclohexanol, für die Ketone z. B. Aceton, Methylethylketon, Methylisopropylketon, Methylisobutylketon, und weiterhin die bei der Umsetzung selbst eingesetzten Lösungsmittel wie sie oben genannt sind.

Die Herstellung der Polyarylensulfide erfolgt nach den üblichen Methoden, wobei erfindungsgemäss bei der Aufarbeitung Massnahmen durchgeführt werden, wodurch die mehr oder weniger korrosiven Eigenschaften (z. B. Abspaltung und Entwicklung korrosiver Gase bei höheren Temperaturen) der Polyarylensulfide beseitigt werden können.

Nach Durchführung der Polymerisationsreaktion wird erfindungsgemäss bei der Aufarbeitung das Reaktionsgemisch in das Fällungslösungsmittel f) (Alkohol, Keton oder das gleiche Lösungsmittel, das bei der Polymerisation verwendet wurde) eingetragen, wobei das Polymere ausgefällt wird. Anschliessend wird das Polymere zuerst mit der Komponente f) und abschliessend mit Wasser gewaschen. Im allgemeinen sind dann im Polymeren keine Elektrolyte wie anorganische Salze (z. B. NaCl) mehr nachzuweisen.

Zur Messung der relativen Korrosivität eines Polyarylensulfides werden 10 g Polymeres bei 320 °C aufgeschmolzen und mit 5 l Luft/h begast. Der Gasstrom wird durch Wasser geleitet. In zeitlichen Abständen von 30 Minuten werden die im Wasser gelösten Gase titriert. Saure Gase werden mit NaOH, basische Gase mit HCl auf übliche Weise titriert. Der Verbrauch an NaOH ist ein Anzeichen für die korrosiven Eigenschaften des Polyarylensulfids.

Die erfindungsgemässen Polyarylensulfide können mit anderen Polymeren, wie Pigmenten und Füllstoffen, beispielsweise Graphit, Metallpulver, Glaspulver, Quarzmehl oder Glasfasern gemischt oder mit den für Polyarylensulfide üblichen Additiven, beispielsweise üblichen Stabilisatoren oder Entformungsmitteln, versetzt werden.

Sie können direkt durch Extrusion, Extrusionsblasen, Spritzgiessen oder sonst übliche Verarbeitungstechniken zu Folien, Formkörpern oder Fasern verarbeitet werden. Diese können in üblicher Weise Verwendung finden, z. B. als Automobilteile, Armaturen, Elektroteile, z. B. Schalter, elektronische Tafeln, chemikalienresistente und verwitterungsstabile Teile und Apparate wie Pumpengehäuse und Pumpenflügelräder, Ätzbadschalen, Dichtungsringe, Teile von Büromaschinen und Fernmeldeeinrichtungen, sowie von Haushaltsgeräten, Ventilen, Kugellagerteilen.

Beispiele

Beispiel 1

In einem mit Rührer und Destillationsaufsatz ausgerüstetem Autoklaven werden 1.290 g Natriumsulfidtrihydrat (≙ 10,0 Mol $Na_2S$), 204,1 g Natriumacetat-trihydrat (15 Mol-% bezogen auf $Na_2S$), ausreichend Natronlauge zur Neutralisation von Natriumhydrogensulfid und 4.000 ml N-Methylpyrrolidon vorgelegt und auf 200 °C erhitzt. Dabei destilliert eine Flüssigkeit ab, die im wesentlichen aus Wasser besteht.

Anschliessend werden 1.470 g 1,4-Dichlorbenzol und 14,5 g 1,2,4-Trichlorbenzol, gelöst in 500 ml N-Methylpyrrolidon, zugegeben und das Reaktionsgemisch auf 240 °C aufgeheizt und 5 h bei dieser Temperatur belassen.

Nach beendeter Reaktion wird das Reaktionsgemisch unter kräftigem Rühren in verschiedene Fällungslösungsmittel eingetragen. Das ausgefallene Produkt wird viermal mit der vierfachen Menge Fällungslösungsmittel gewaschen und anschliessend zur Entfernung von Restmengen anorganischer Salze mit Wasser elektrolytfrei gewaschen.

Vergleichsweise wurde die Reihenfolge der Wäschen umgekehrt (Ergebnisse siehe Tabelle 1). Mechanische Eigenschaften werden durch diese Aufarbeitungsweise im allgemeinen nicht beeinflusst.

Tabelle 1

| Fällungs-Lösungsmittel | 2. Wasch-Lösungs-mittel | saure Gase nach (Minuten) 30' in ml | 60' n/10 NaOH |
|---|---|---|---|
| Methanol | $H_2O$ | 2,7 | 3,2 |
| Ethanol | $H_2O$ | 3,5 | 4,9 |
| Propanol | $H_2O$ | 3,4 | 4,9 |
| Isopropanol | $H_2O$ | 2,5 | 3,4 |
| Aceton | $H_2O$ | 4,0 | 5,2 |
| Methylethylketon | $H_2O$ [1] | 4,5 | 5,4 |
| Methylisopropylketon | $H_2O$ [1] | 4,0 | 5,1 |
| Methylisobutylketon | $H_2O$ [1] | 4,2 | 5,3 |
| N-Methylpyrrolidon | $H_2O$ | 2,6 | 3,9 |
| [2] Cyclohexan | $H_2O$ [1] | 5,2 | 6,9 |
| [2] Toluol | $H_2O$ [1] | 5,3 | 6,4 |
| [2] $H_2O$ | Aceton | 5,9 | 7,2 |
| [2] $H_2O$ | Isopropanol | 5,9 | 7,4 |
| [2] $H_2O$ | Ethanol | 5,4 | 7,0 |

[1] Das Fällungslösungsmittel wurde vor der Wasserwäsche mit Wasserdampf vertrieben.
[2] Nicht erfindungsgemäss.

Beispiel 2

Wie Beispiel 1, jedoch wurde anstelle von N-methylpyrrolidon N-Methylcaprolactam eingesetzt (s. Tabelle 2).

Tabelle 2

| Fällungs-Lösungsmittel | 2. Wasch-Lösungs-mittel | saure Gase nach (Minuten) 30' ml | 60' n/10 NaOH |
|---|---|---|---|
| Methanol | $H_2O$ | 2,9 | 3,5 |
| Ethanol | $H_2O$ | 3,9 | 5,1 |
| Propanol | $H_2O$ | 3,4 | 5,0 |
| Isopropanol | $H_2O$ | 2,8 | 3,7 |
| Aceton | $H_2O$ | 4,1 | 5,5 |
| Methylethylketon | $H_2O$ [1] | 4,6 | 5,6 |
| Methylisopropylketon | $H_2O$ [1] | 3,9 | 4,7 |
| Methylisobutylketon | $H_2O$ [1] | 4,8 | 5,9 |
| N-Methylcaprolactam | $H_2O$ | 2,9 | 4,2 |
| [2] Cyclohexan | $H_2O$ [1] | 4,8 | 6,4 |
| [2] Toluol | $H_2O$ [1] | 5,1 | 6,3 |
| [2] $H_2O$ | Aceton | 6,1 | 7,6 |
| [2] $H_2O$ | Isopropanol | 5,8 | 7,1 |
| [2] $H_2O$ | Ethanol | 5,6 | 7,3 |

[1] Das Fällungslösungsmittel wurde vor der Wasserwäsche mit Wasserdampf vertrieben.
[2] Nicht erfindungsgemäss.

**Patentansprüche**

1. Verfahren zur Herstellung von hochmolekularen, gegebenenfalls verzweigten Polyarylensulfiden aus

a) 50–100 Mol-% Dihalogenaromaten der Formel

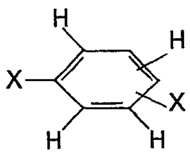

(I),

und 0–50 Mol-% Dihalogenaromaten der Formel

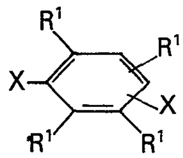

(II),

in denen

X für zueinander meta- oder paraständiges Halogen steht und

$R^1$ gleich oder verschieden ist und Wasserstoff, Alkyl, Cycloalky, Aryl, Alkylaryl, Arylalkyl sein kann, wobei zwei zueinander orthoständige Reste $R^1$ zu einem aromatischen oder heterocyclischen Ring verknüpft sein können und immer ein Rest $R^1$ verschieden von Wasserstoff ist und

b) 0 bis 5 Mol-%, bezogen auf die Summe der Komponenten a) und b) eines Tri- oder Tetrahalogenaromaten der Formel

$$ArX_n \qquad (III),$$

wobei

Ar ein aromatischer oder heterocyclischer Rest ist,

X für Chlor oder Brom und

n für die Zahl 3 oder 4 steht und

c) Alkalisulfiden, gegebenenfalls zusammen mit Alkalihydroxiden, wobei das molare Verhältnis von (a+b):c im Bereich von 0,85:1 bis 1,15:1 liegt und

d) einem organischen Lösungsmittel, gegebenenfalls unter Mitverwendung von Katalysatoren und/oder Cosolventien, wobei das molare Verhältnis von Alkalisulfiden c) zu dem organischen Lösungsmittel d) im Bereich von 1:2 bis 1:15 liegt, und

e) Wasser in Form von Hydrat- oder freiem Wasser, wobei das molare Verhältnis von c):e) im Bereich von 1:0 bis 1:3 liegt und das Verfahren bei einer Reaktionstemperatur von 160 °C bis 270 °C, gegebenenfalls unter Überdruck durchgeführt wird,

wobei man nach Beendigung der Umsetzung das Reaktionsgemisch in

f) Alkohole oder Ketone oder das gleiche Lösungsmittel d), das bei der Reaktion verwendet wurde, als Fällungsmittel einträgt und anschliessend wäscht,

dadurch gekennzeichnet, dass man das gefällte Produkt in der folgenden Reihenfolge wäscht:

(1) zuerst mit Komponente f) und

(2) abschliessend mit Wasser.

2. Verfahren nach Anspruch 1, dadurch gekennzeichnet, dass man N-methylpyrrolidon oder N-Methylcaprolactam als Koponente f) verwendet.

## Claims

Process for the preparation of high molecular weight, optionally branched polyarylene sulphides from

a) 50–100 mol % of aromatic dihalogen compounds of the formula

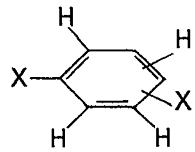

(I),

and 0–50 mol % of aromatic dihalogen compounds of the formula

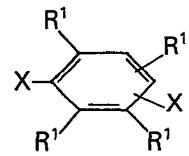

(II),

in which

X represents halogen in a meta- or para-position to each other and

$R^1$ is identical or different and can be hydrogen, alkyl, cycloalkyl, aryl, alkylaryl or arylalkyl, it being possible for two radicals $R^1$ which are in an ortho-position to each other to be linked to form an aromatic or heterocyclic ring and one radical $R^1$ is always different from hydrogen and

b) 0 to 5 mol %, based on the sum of components a) and b) of an aromatic tri- or tetrahalogen compound of the formula

$$ArX_n \qquad (III),$$

wherein

Ar is an aromatic or heterocyclic radical,

X represents chlorine or bromine and

n represents the number 3 or 4 and

c) alkali metal sulphides, optionally together with alkyali metal hydroxides, the molar ratio of (a+b):c being in the range from 0.85:1 to 1.15:1 and

d) an organic solvent, optionally also using catalysts and/or cosolvents, the molar ratio of alkali metal sulphides c) to the organic solvent d) being in the range from 1:2 to 1:15, and

e) water, in the form of hydrate or free water, the molar ratio of c):e) being in the range from 1:0 to 1:3, and the process being carried out at a reaction temperature of 160 °C to 270 °C, optionally under excess pressure,

wherein, after the reaction has ended, the reaction mixture is introduced into

f) alcohols or ketones or the same solvent d) which was used in the reaction, as precipitants, and is then washed, characterised in that the precipitated product is washed in the following sequence:

(1) first with component f) and

(2) finally with water.

2. Process according to claim 1, characterised in that N-methylpyrrolidone or N-methylcaprolactam are used as component f).

**Revendications**

1. Procédé de production de polyarylènesulfures de haut poids moléculaire, éventuellement ramifiés, à partir

a) de 50 à 100 moles % d'hydrocarbures aromatiques dihalogénés de formule

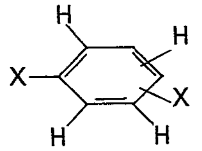

(I),

et de 0 à 50 moles % d'hydrocarbures aromatiques dihalogénés de formule

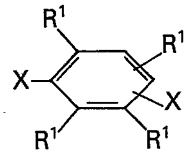

(II),

formules dans lesquelles

X désigne des atomes d'halogènes en position méta ou para l'un par rapport à l'autre et

$R^1$ a des valeurs identiques ou différentes et peut représenter l'hydrogène, ou groupe alkyle, cycloalkyle, aryle, alkylaryle, arylalkyle, deux restes $R^1$ en position ortho l'un par rapport à l'autre pouvant être liés en un noyau aromatique ou hétérocyclique et il y a toujours un reste $R^1$ différent d'un atome d'hydrogène, et

b) de 0 à 5 moles %, par rapport à la somme des composants a) et b), d'un hydrocarbure aromatique trihalogéné ou tétrahalogéné de formule

$$ArX_n \qquad (III),$$

dans laquelle

Ar est un reste aromatique ou hétérocyclique,
X désigne le chlore ou le brome et
n a la valeur 3 ou 4 et

c) de sulfures alcalins, le cas échéant conjointement avec des hydroxyides alcalins, le rapport molaire (a+b):c se situant dans l'intervalle de 0,85:1 à 1,15:1 et

d) d'un solvant organique, en utilisant éventuellement des catalyseurs et/ou des cosolvants, le rapport molaire des sulfures alcalins c) au solvant organique d) se situant dans l'intervalle de 1:2 à 1:15, et

e) d'eau, sous la forme d'eau d'hydratation ou d'eau libre, le rapport molaire c):e) se situant dans l'intervalle de 1:0 à 1:3, et le procédé étant mis en œuvre à une température de réaction de 160 à 270 °C, éventuellement sous une surpression, et une fois la réaction terminée, on verse comme agents précipitants dans le mélange réactionnel

f) des alcools ou des cétones ou le même solvant d) que celui qui a été utilisé dans la réaction, puis on lave,
caractérisé en ce que le produit précipité est lavé dand l'ordre suivant:

(1) tout d'abord avec le composant f) et
(2) ensuite avec de l'eau.

2. Procédé suivant la revendication 1, caractérisé en ce qu'on utilise la N-méthylpyrrolidone ou le N-méthylcaprolactame comme composant f).